(19) Europäisches Patentamt / European Patent Office / Office européen des brevets

(11) **EP 3 306 562 B1**

(12) **EUROPEAN PATENT SPECIFICATION**

(45) Date of publication and mention
of the grant of the patent:
**08.04.2020 Bulletin 2020/15**

(21) Application number: **16802417.2**

(22) Date of filing: **28.04.2016**

(51) Int Cl.:
*G06T 3/40* *(2006.01)*      *G06T 7/13* *(2017.01)*

(86) International application number:
**PCT/CN2016/080445**

(87) International publication number:
**WO 2016/192494 (08.12.2016 Gazette 2016/49)**

(54) **IMAGE PROCESSING METHOD AND DEVICE**

BILDVERARBEITUNGSVERFAHREN UND VORRICHTUNG

DISPOSITIF ET PROCÉDÉ DE TRAITEMENT D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.05.2015 CN 201510291061**

(43) Date of publication of application:
**11.04.2018 Bulletin 2018/15**

(73) Proprietor: **Alibaba Group Holding Limited
Grand Cayman (KY)**

(72) Inventor: **DING, Wei
Hangzhou 310099 (CN)**

(74) Representative: **Conroy, John
Fish & Richardson P.C.
Highlight Business Towers
Mies-van-der-Rohe-Straße 8
80807 München (DE)**

(56) References cited:
**WO-A1-2016/017272      CN-A- 101 511 022
CN-A- 101 511 022      CN-A- 101 742 291
CN-A- 103 927 767      US-A1- 2012 014 608**

• **BUDI SUGANDI ET AL: "Tracking of Moving
Objects by Using a Low Resolution Image",
INNOVATIVE COMPUTING, INFORMATION AND
CONTROL, 2007. ICICIC '07. SECOND
INTERNATIONAL CONFERENCE ON, IEEE, PI, 1
September 2007 (2007-09-01), pages 408-408,
XP031200461, ISBN: 978-0-7695-2882-3**

## Description

### Technical Field

The present application relates to the field of image processing, and in particular, to an image processing method and apparatus.

### Background Art

With the rapid development of science and technology, video technologies are widely used in various fields for monitoring a specific scene, retrieving a target person, and so on.

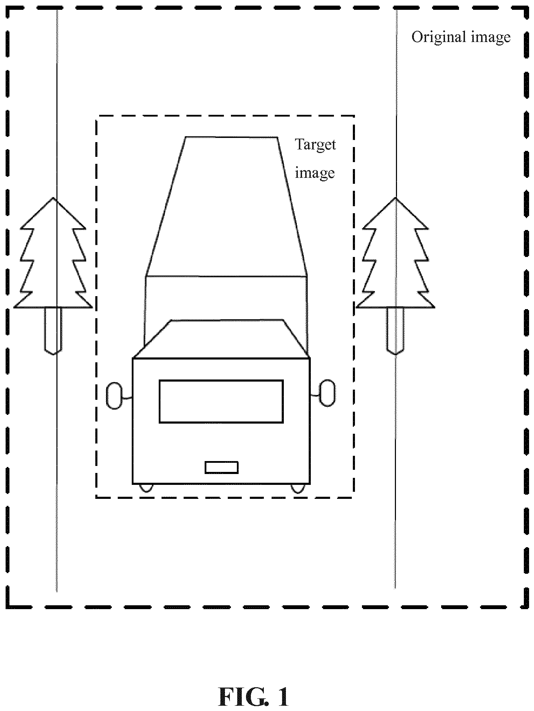

When an original image collected by a camera is processed, it is often necessary to identify a target object or a target person from the original image (i.e., to determine a target image). At present, to determine a target image from the original image (with reference to FIG. 1), pixels in the original image are usually scanned one by one to determine borderlines of the target image from the original image. When the original image has a high resolution, it needs to take a few seconds or even longer to determine the target image from the original image by using the foregoing technical solution as the original image contains lots of pixel points. The time required for acquiring the target image is long and the efficiency is low.

As can be seen, a problem currently exists that it takes a long time to acquire a target image from an original image.

US 2012/0014608 describes an image processing apparatus that includes: a reducing section reducing an image for which a feature analysis is to be perform at a predetermined reduction ratio; an ROI mask generating section analyzing a feature of a reduced image as the image reduced at the predetermined reduction ratio, and generating an ROI mask as mask information indicating a region of interest as a region to be interested in the reduced image; an ROI mask enlarging section enlarging a size of the ROI mask to a size of the image before being reduced by the reducing section; and an ROI mask updating section analyzing a feature of a region, set as a blank region as a region not to be interested in the ROI mask, of the image before being reduced by the reducing section, and updating the ROI mask by using an analysis result.

Busi Sagandi et al: "Tracking of Moving Objects by Using a Low Resolution Image" discusses a proposed method by using a low resolution image to reduce noise to get accurate tracking of an object.

CN 101511022 describes a combination of methods for airborne video compression and target tracking, which utilizes current video compression algorithm to extract intermediate data from the video compression algorithm the various parameters of airplanes and rotational stations.

## Summary of the Invention

Embodiments of the present application provide an image processing method and apparatus for solving the current problem that it takes a long time to acquire a target image from an original image.

Specific technical solutions provided by the embodiments of the present application are as follows.

An image processing method as defined in claim 1. The method includes: acquiring an original image; wherein the original image includes a target image; performing image compression processing on the original image according to a preset compression ratio, to acquire a low-pixel image after the image compression processing; determining borderlines of the target image in the low-pixel image; and mapping the determined borderlines included in the low-pixel image into the original image, to acquire the target image included in the original image.

The performing image compression processing on the original image according to a preset compression ratio, to acquire a low-pixel image after the image compression processing specifically includes: determining a position of each pixel point after compression according to the preset compression ratio; performing image compression processing on the original image by using a fast bilinear interpolation algorithm, to acquire a pixel value of each pixel point after compression, and generating the low-pixel image according to the pixel value and the position of each pixel point after compression.

The performing image compression processing on the original image by using a fast bilinear interpolation algorithm, to acquire a pixel value of each pixel point after compression specifically includes:

determining, among all original pixel points included in the original image, four original pixel points corresponding to each pixel point after compression according to the preset compression ratio; determining, among the four original pixel points corresponding to each pixel point after compression, two pairs of original pixel points in a first direction and two pairs of original pixel points in a second direction, wherein the first direction is a horizontal direction and the second direction is a vertical direction, or, the first direction is a vertical direction and the second direction is a horizontal direction; acquiring first interpolations respectively corresponding to the two pairs of original pixel points of each pixel point after compression in the first direction, and taking the acquired two first interpolations as initial interpolations; or, acquiring second interpolations respectively corresponding to the two pairs of original pixel points of each pixel point after compression in the second direction, and taking the acquired two second interpolations as initial interpolations; calculating an interpolation corresponding to each pixel point after compression according to the initial interpolations corresponding to each pixel point after compression, and determining the pixel value of each pixel point after compression according to the calculated interpolation corresponding to each pixel point after compression.

Optionally, the determining borderlines of the target image in the low-pixel image specifically includes: determining a to-be-detected region from the low-pixel image; and performing borderline detection processing on the to-be-detected region according to a gradient value between every two adjacent pixel points in the to-be-detected region, to determine the borderlines of the target image.

Optionally, the determining a to-be-detected region from the low-pixel image specifically includes: binarizing the low-pixel image to convert the low-pixel image into a binary image, wherein the binary image includes only two colors; performing edge detection processing on the binary image to acquire at least one edge line included in the binary image; separately dilating each edge line; connecting each dilated edge line, to acquire connected regions; screening the connected regions according to position information of each connected region respectively, to acquire a specific region, wherein the specific region is a region including a specific graphic portion in the target image; and determining a region other than the specific region in the low-pixel image as the to-be-detected region.

Further, before the performing edge detection processing on the binary image, the method further includes: performing Gauss smoothing on the binary image by using a preset Gauss smoothing parameter.

Optionally, the performing borderline detection on the to-be-detected region according to a gradient value between every two adjacent pixel points in the to-be-detected region, to determine the borderlines of the target image specifically includes: binarizing the low-pixel image, to convert the low-pixel image into a binary image, wherein the binary image includes only two colors; and executing the following operations in an arbitrary direction: separately comparing a gradient value between every two adjacent pixel points in the to-be-detected region of the binary image in the arbitrary direction with a preset initial gradient threshold corresponding to the arbitrary direction, and acquiring an initial borderline in the arbitrary direction according to the comparison result; and determining the borderlines of the target image respectively according to the number of initial borderlines acquired in each direction.

Optionally, the determining the borderlines of the target image respectively according to the number of initial borderlines acquired in each direction specifically includes: executing the following operations for a detection result in an arbitrary direction: separately performing straight line detection on each initial borderline in the arbitrary direction according to position information of each initial borderline in the arbitrary direction when the number of initial borderlines acquired in the arbitrary direction is at least two, to acquire borderlines in the arbitrary direction from the at least two initial borderlines in the arbitrary direction; or successively decreasing the preset initial gradient threshold corresponding to the arbitrary direction according to a preset first gradient difference when the number of initial borderlines acquired in the arbitrary direction is less than two, and detecting the to-be-detected region of the binary image in the arbitrary direction by using the decreased initial gradient threshold, until the number of initial borderlines acquired in the arbitrary direction is at least two.

The mapping the borderlines included in the low-pixel image into the original image, to acquire the target image included in the original image specifically includes: acquiring an intersection point of every two adjacent borderlines included in the low-pixel image; separately mapping the acquired intersection points into the original image according to the preset compression ratio, to generate corresponding mapping points in the original image; and successively connecting the mapping points mapped into the original image, and determining a quadrangle generated after the connection as the target image included in the original image.

Further, after the acquiring a target image included in the original image, the method further includes: correcting the target image by using a projective transformation algorithm.

An image processing apparatus as defined in claim 8. The apparatus includes: an original image acquisition unit configured to acquire an original image, wherein the original image includes a target image; a low-pixel image acquisition unit configured to perform image compression processing on the original image according to a preset compression ratio, to acquire a low-pixel image after the image compression processing; a borderline determination unit configured to determine borderlines of the target image in the low-pixel image; and a target image acquisition unit configured to map the determined borderlines included in the low-pixel image into the original image, to acquire the target image included in the original image.

The low-pixel image acquisition unit is specifically configured to: determine a position of each pixel point after compression according to the preset compression ratio; perform image compression processing on the original image by using a fast bilinear interpolation algorithm, to acquire a pixel value of each pixel point after compression, and generate the low-pixel image according to the pixel value and the position of each pixel point after compression.

The performing, by the low-pixel image acquisition unit, image compression processing on the original image by using a fast bilinear interpolation algorithm, to acquire a pixel value of each pixel point after compression specifically includes: determining, among all original pixel points included in the original image, four original pixel points corresponding to each pixel point after compression according to the preset compression ratio; determining, among the four original pixel points corresponding to each pixel point after compression, two pairs of original pixel points in a first direction and two pairs of original pixel points in a second direction, wherein the first direction is a horizontal direction and the second direction is a vertical direction, or, the first direction is a vertical direction and the second direction is a horizontal direction; acquiring first interpolations respectively corresponding to the two pairs of original pixel points of each pixel point after compression in the first direction, and taking the acquired two first interpolations as initial interpolations; or, acquiring second interpolations respectively corresponding to the two pairs of original pixel points of each pixel point after compression in the second direction, and taking the acquired two second interpolations as the initial interpolations; calculating an interpolation corresponding to each pixel point after compression according to the initial interpolations corresponding to each pixel point after compression, and determining the pixel value of each pixel point after compression according to the calculated interpolation corresponding to each pixel point after compression.

The borderline determination unit is configured to: determine a to-be-detected region from the low-pixel image; and perform borderline detection processing on the to-be-detected region according to a gradient value between every two adjacent pixel points in the to-be-detected region, to determine the borderlines of the target image.

Optionally, the determining, by the borderline determination unit, a to-be-detected region from the low-pixel image specifically includes: binarizing the low-pixel image, to convert the low-pixel image into a binary image, wherein the binary image includes only two colors; performing edge detection processing on the binary image to acquire at least one edge line included in the binary image; separately dilating each edge line; connecting each dilated edge line, to acquire connected regions; screening the connected regions according to position information of each connected region respectively, to acquire a specific region, wherein the specific region is a region including a specific graphic portion in the target image; and determining a region other than the specific region in the low-pixel image as the to-be-detected region.

Further, the apparatus further includes a Gauss smoothing unit configured to: perform Gauss smoothing on the binary image by using a preset Gauss smoothing parameter before the edge detection processing is performed on the binary image.

Optionally, the performing, by the borderline determination unit, borderline detection on the to-be-detected region according to a gradient value between every two adjacent pixel points in the to-be-detected region, to determine the borderlines of the target image specifically includes: binarizing the low-pixel image, to convert the low-pixel image into a binary image, wherein the binary image includes only two colors; and executing the following operations in an arbitrary direction: separately comparing a gradient value between every two adjacent pixel points in the to-be-detected region of the binary image in the arbitrary direction with a preset initial gradient threshold corresponding to the arbitrary direction, and acquiring an initial borderline in the arbitrary direction according to the comparison result; and determining the borderlines of the target image respectively according to the number of initial borderlines acquired in each direction.

Optionally, the determining, by the borderline determination unit, the borderlines of the target image respectively according to the number of initial borderlines acquired in each direction specifically includes: executing the following operations for a detection result in an arbitrary direction: separately performing straight line detection on each initial borderline in the arbitrary direction according to position information of each initial borderline in the arbitrary direction when the number of initial borderlines acquired in the arbitrary direction is at least two, to acquire borderlines in the arbitrary direction from the at least two initial borderlines in the arbitrary direction; or successively decreasing the preset initial gradient threshold corresponding to the arbitrary direction according to a preset first gradient difference when the number of initial borderlines acquired in the arbitrary direction is less than two, and detecting the to-be-detected region of the binary image in the arbitrary direction by using the decreased initial gradient threshold, until the number of initial borderlines acquired in the arbitrary direction is at least two.

The target image acquisition unit is specifically configured to: acquire an intersection point of every two adjacent borderlines included in the low-pixel image; separately map the acquired intersection points into the original image according to the preset compression ratio; and successively connect the points mapped into the original image, and determine a quadrangle generated after the connection as the target image included in the original image.

Further, the apparatus further includes a correction unit configured to: correct the target image by using a projective transformation algorithm after the target image included in the original image is acquired.

In the embodiments of the present application, an original image is converted into a low-pixel image according to a preset compression ratio; borderline detection is performed on the low-pixel image, to determine borderlines of a target image included in the low-pixel image; and the borderlines included in the low-pixel image are mapped into the original image, to acquire the target image included in the original image. By means of the technical solution of the present application, the original image is converted into a low-pixel image. Since the low-pixel image includes fewer pixel points, and the target image is acquired based on the low-pixel image, the target image acquisition process based on the low-pixel image shortens the duration for acquiring the target image, and increases the efficiency of acquiring the target image.

## Brief Description of the Drawings

FIG. 1 is a schematic diagram of an original image in the prior art;

FIG. 2 is an architecture diagram of an image processing system in an embodiment of the present application;

FIG. 3 is a flowchart of image processing in an embodiment of the present application;

FIG. 4 is a flowchart of generating a low-pixel image in an embodiment of the present application;

FIG. 5a is a schematic diagram of a rectangular coordinate system in an embodiment of the present application;

FIG. 5b is a schematic diagram of interpolation calculation in an embodiment of the present application;

FIG. 6 is a schematic diagram of a connected region acquired in an embodiment of the present application;

FIG. 7 is a flowchart of determining borderlines of a target image in an embodiment of the present application;

FIG. 8 is a schematic diagram of determining borderlines of a target image in an embodiment of the present application; and

FIG. 9 is a schematic structural diagram of an image processing apparatus in an embodiment of the present application.

## Detailed Description

In order to solve the problem that it takes a long time to acquire a target image from an original image at present, in the embodiments of the present application, an original image is converted into a low-pixel image according to a preset compression ratio; borderline detection is performed on the low-pixel image, to determine borderlines of a target image included in the low-pixel image; and the borderlines included in the low-pixel image are mapped into the original image, to acquire the target image included in the original image. By means of the technical solution of the present application, the original image is converted into a low-pixel image. Since the low-pixel image includes fewer pixel points, and the target image is acquired based on the low-pixel image, the target image acquisition process based on the low-pixel image shortens the duration for acquiring the target image, and increases the efficiency of acquiring the target image.

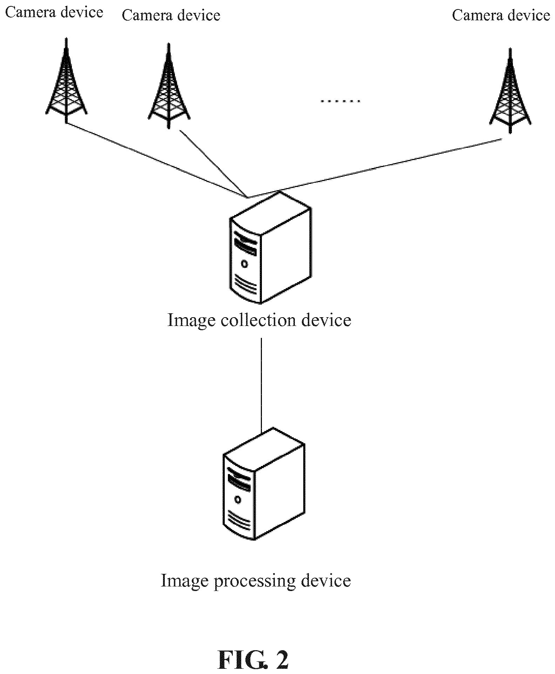

With reference to FIG. 2, it is an architecture diagram of an image processing system in an embodiment of the present application. The image processing system includes an image processing device configured to process an acquired original image, to determine a target image from the original image. The image processing device may possess a user interaction interface, for presenting the target image to users. In addition, the image processing system may further include a plurality of camera devices configured to provide original images to be processed for the image processing device. Optionally, the image processing system may also include an image collection device configured to collect the original images provided by the camera devices, and send the collected original images to the image processing device. The image processing device may also be various mobile terminals having camera functions. In the embodiments of the present application, various mobile terminals having camera functions are taken as an example of the image processing device, for introducing the image acquisition process in detail.

Hereinafter, preferred embodiments of the present application are illustrated in detail with reference to the accompanying drawings.

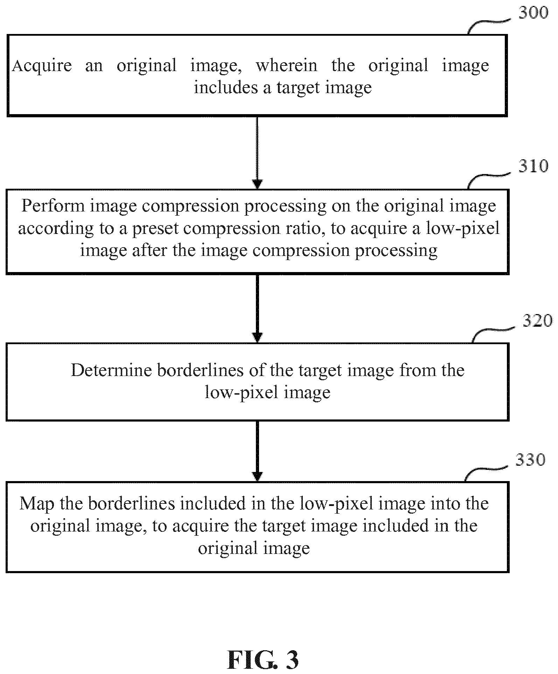

With reference to FIG. 3, in the embodiments of the present application, the process of processing an original image to acquire a target image included in the original image includes:

Step 300. An original image is acquired, wherein the original image includes a target image.

Step 310. Image compression processing is performed on the original image according to a preset compression ratio, to acquire a low-pixel image after the image compression processing.

Step 320. Borderlines of the target image are determined from the low-pixel image.

Step 330. The borderlines included in the low-pixel image are mapped into the original image, to acquire the target image included in the original image.

In step 300, the image collection device separately sends the original image acquired from each camera device to the image processing device, such that the image processing device directly acquires the original image captured by each camera device.

In step 310, the image processing device determines a position of each pixel point in the low-pixel image according to the preset compression ratio, and performs image compression processing on the original image by using a fast bilinear interpolation algorithm, to acquire a pixel value of each pixel point in the low-pixel image, and generates the low-pixel image according to the pixel value and the position of each pixel point after compression. Wherein, the preset compression ratio is a value pre-configured according to a specific application scenario; the preset compression ratio includes a horizontal compression ratio and a longitudinal compression ratio that are preset, and the horizontal compression ratio may be equal to or unequal to the longitudinal compression ratio.

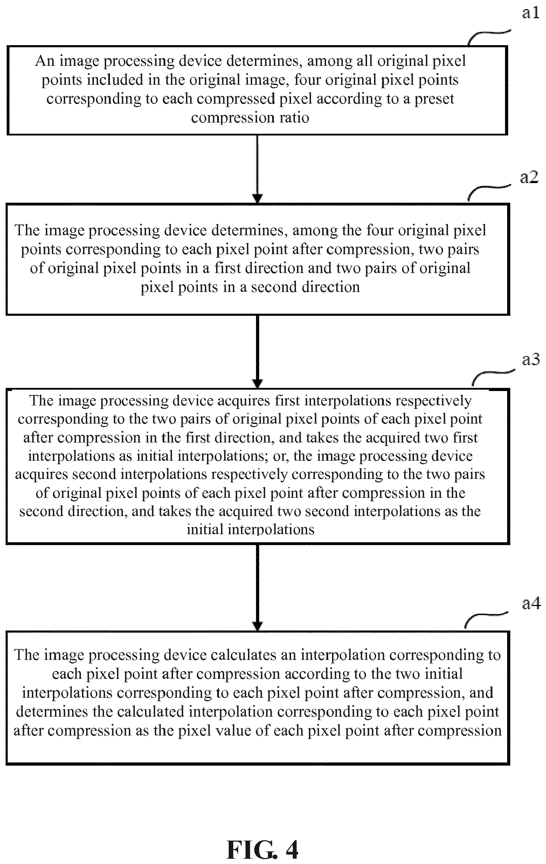

With reference to FIG. 4, in the process of generating a low-pixel image by an image processing device, the process of acquiring, by the image processing device, a pixel value of each pixel point in the low-pixel image specifically includes:

Step a1. The image processing device determines, among all original pixel points included in the original image, four original pixel points corresponding to each pixel point after compression according to a preset compression ratio.

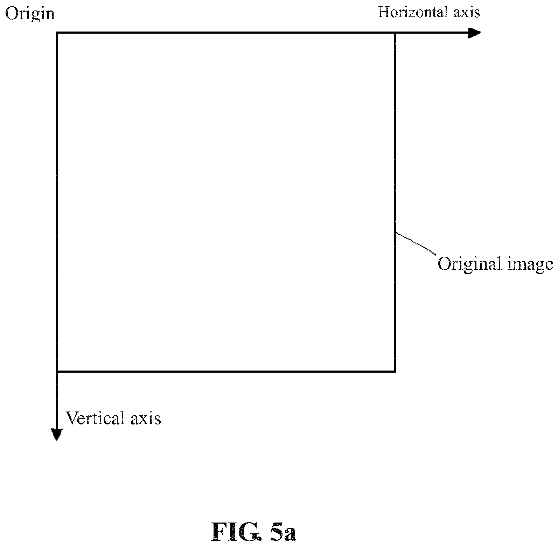

In the embodiments of the present application, optionally, with reference to FIG. 5a, the image processing device establishes a rectangular coordinate system in the original image, in which a horizontal direction is taken as a horizontal axis, a vertical direction perpendicular to the horizontal axis is taken as a vertical axis, and a top left corner of the original image is taken as an origin. Based on the rectangular coordinate system, the first direction is the positive direction of the horizontal axis, the second direction is the positive direction of the vertical axis; or, the first direction is the positive direction of the vertical axis, and the second direction is the positive direction of the horizontal axis.

Further, the image processing device determines, among all the original pixel points included in the original image, the four original pixel points corresponding to each pixel point after compression according to a resolution of the original image and the preset compression ratio, wherein the number of original pixel points corresponding to one compressed pixel point is equal to or greater than one and less than or equal to four, and the number is determined according to the preset compression ratio. For example, if the preset compression ratio is 5:2, that is, $5 \times 5$ pixel points are compressed into $2 \times 2$ pixel points, and the original pixel points corresponding to the first pixel point after compression are the second pixel point in the second row and the third pixel point in the second row, as well as the second pixel point in the third row and the third pixel point in the third row. In this case, the number of original pixel points corresponding to one compressed pixel point is four. For another example, if the preset horizontal compression ratio and longitudinal compression ratio are both 3:1, that is, $3 \times 3$ pixel points are compressed into one pixel point, the original pixel point corresponding to the first pixel point after compression is the third pixel point in the third row ($3 \div 1 = 3$). In this case, the number of original pixel points corresponding to one compressed pixel point is one.

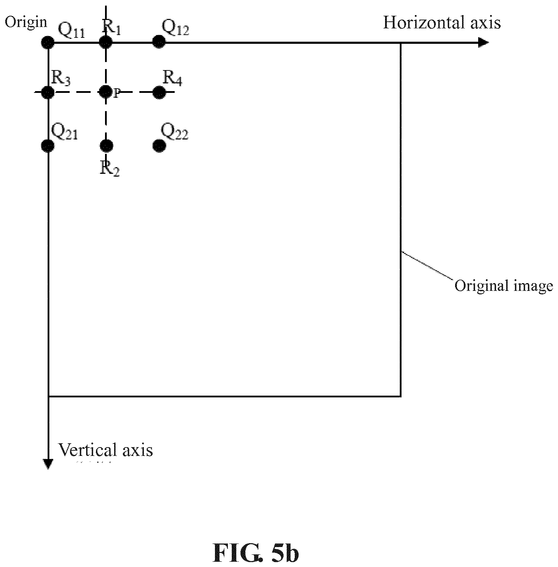

Optionally, for ease of calculation, when the number of original pixel points corresponding to the compressed pixel point is less than four, the number of original pixel points is usually extended to four. That is, an original pixel point adjacent to the original pixel points is determined as the original pixel point corresponding to the compressed pixel point according to the preset compression ratio. A corresponding weight value is configured for each determined original pixel point, and the pixel value of one compressed pixel point is determined based on four original pixel points and the weight values thereof. For example, with reference to FIG. 5b, based on the above established rectangular coordinate system, the resolution of the original image is $a_1 \times a_2$, the preset compression ratio is q, and thus the resolution of the generated low-pixel image is $b_1 \times_2$, wherein ai/bi=q and $a_2/b_2$=q. Starting from the origin of the rectangular coordinate system, the first pixel point in the low-pixel image is P, the first original pixel point of the original image corresponding to the pixel point P is represented by $Q_{11}$, the second original pixel point of the original image corresponding to the pixel point P is represented by $Q_{12}$, the third original pixel point of the original image corresponding to the pixel point P is represented by $Q_{21}$, and the fourth original pixel point of the original image corresponding to the pixel point P is represented by $Q_{22}$. Wherein, the weight value of each original pixel point can be acquired according to the preset compression ratio. For example, if the preset compression ratio is 5:2, that is, $5 \times 5$ pixel points are compressed into $2 \times 2$ pixel points, the four original pixel points corresponding to the original pixels corresponding to the first pixel point after compression are the second pixel point in the second row and the third pixel point in the second row, as well as the second pixel point in the third row and the third pixel point in the third row. Since a distance from the second pixel point in the second row to the compressed pixel point is 0.5 (an absolute value of $5 \div 2$-2), the weight value of the second pixel point in the second row is 0.5, and likewise, the weight values of the other three pixel points are also 0.5.

Because the weight value is a positive integer or a non-positive integer, when the weight value is a non-positive integer, optionally, shift operation is performed on the weight value, to acquire a corresponding positive integer, and image processing is performed according to the acquired positive integer. After the completion of the image processing, the shift operation is performed again on the position of each pixel point included in the acquired low-pixel image, and a correction operation is performed on each pixel value, to enhance the accuracy of the finally acquired target image while ensuring a decreased amount of image processing.

Step a2. The image processing device determines, among the four original pixel points corresponding to each pixel point after compression, two pairs of original pixel points in a first direction and two pairs of original pixel points in a second direction.

In the embodiment of the present application, the image processing device divides the four original images corresponding to one compressed pixel point into two pairs, wherein, two original pixel images, among the four original pixel points, located in the same row or in the same column are taken as one pair. For example, if the preset compression ratio is 5:2, the four original pixel points corresponding to the original pixels corresponding to the first pixel point after compression are the second pixel point in the second row and the third pixel point in the second row, as well as the second pixel point in the third row and the third pixel point in the third row. In this case, the second pixel point in the second row and the third pixel point in the second row are in one pair, and the second pixel point in the third row and the third pixel point in the third row are in one pair.

Based on the acquired four original pixel points, the image processing device determines, among the four original pixel points corresponding to each pixel point after compression, two pairs of original pixel points in a first direction and two pairs of original pixel points in a second direction. For example, with reference to FIG. 5b, if the first direction is the positive direction of the horizontal axis, and the second direction is the positive direction of the vertical axis, the two pairs of original pixel points in the first direction are $Q_{11}$ and $Q_{12}$ as well as $Q_{21}$ and $Q_{22}$ respectively, and the two pairs of original pixel points in the second direction are $Q_{11}$ and $Q_{21}$ as well as $Q_{12}$ and $Q_{22}$ respectively.

Step a3. The image processing device acquires first interpolations respectively corresponding to the two pairs of original pixel points of each pixel point after compression in the first direction, and takes the acquired two first interpolations as initial interpolations; or, the image processing device acquires second interpolations respectively corresponding to the two pairs of original pixel points of each pixel point after compression in the second direction, and takes the acquired two second interpolations as initial interpolations.

In the embodiment of the present application, when acquiring the initial interpolations corresponding to each pixel point after compression, the image processing device may employ the following two manners:

First manner: the image processing device acquires the first interpolations respectively corresponding to the two pairs of original pixel points of each pixel point after compression in the first direction, and takes the acquired two interpolations as the initial interpolations corresponding to each pixel point after compression. For example, with reference to FIG. 5b, if the first direction is the positive direction of the horizontal axis, and the second direction is the positive direction of the vertical axis, the first interpolations are an interpolation of $Q_{11}$ and $Q_{12}$ and an interpolation of $Q_{21}$ and $Q_{22}$.

Second manner: the image processing device acquires the second interpolations respectively corresponding to the two pairs of original pixel points of each pixel point after compression in the second direction, and takes the acquired two interpolations as the initial interpolations corresponding to each pixel point after compression. For example, with reference to FIG. 5b, if the first direction is the positive direction of the horizontal axis, and the second direction is the positive direction of the vertical axis, the second interpolations are an interpolation of $Q_{11}$ and $Q_{21}$ and an interpolation of $Q_{12}$ ad $Q_{22}$.

Step a4. The image processing device calculates an interpolation corresponding to each pixel point after compression according to the two initial interpolations corresponding to each pixel point after compression, and determines the calculated interpolation corresponding to each pixel point after compression as the pixel value of each pixel point after compression.

In the embodiment of the present application, based on the two manners in step a3, there are two manners for acquiring the interpolation corresponding to each pixel point after compression.

First manner: the image processing device determines the first interpolations respectively corresponding to the two pairs of original pixel points of each pixel point after compression in the first direction as the initial interpolations corresponding to each pixel point after compression, calculates an interpolation of the determined two initial interpolations corresponding to each pixel point after compression in the second direction, and takes the interpolation as the interpolation corresponding to each pixel point after compression. For example, with reference to FIG. 5b, if the first direction is the positive direction of the horizontal axis, and the second direction is the positive direction of the vertical axis, the initial interpolation of $Q_{11}$ and $Q_{12}$ is $R_1$ and the initial interpolation of $Q_{21}$ and $Q_{22}$ is $R_2$, an interpolation of the initial interpolation $R_1$ and the initial interpolation $R_2$ is calculated, and the calculated interpolation is determined as the pixel value of the pixel point P after compression of the original pixel points $Q_{11}$, $Q_{12}$, $Q_{21}$, and $Q_{22}$.

Second manner: the image processing device determines the second interpolations respectively corresponding to the two pairs of original pixel points of each pixel point after compression in the second direction as the initial interpolations corresponding to each pixel point after compression, calculates an interpolation of the determined two initial interpolations corresponding to each pixel point after compression in the first direction, and takes the interpolation as the interpolation corresponding to each pixel point after compression. For example, with reference to FIG. 5b, if the first direction is the positive direction of the horizontal axis, and the second direction is the positive direction of the vertical axis, the initial inter-

polation of $Q_{11}$ and $Q_{21}$ is $R_3$ and the initial interpolation of $Q_{12}$ and $Q_{22}$ is $R_4$, an interpolation of the initial interpolation $R_3$ and the initial interpolation $R_4$ is calculated, and the calculated interpolation is determined as the pixel value of the pixel point P after compression of the original pixel points $Q_{11}$, $Q_{12}$, $Q_{21}$, and $Q_{22}$.

All pixel values of the pixel points in the low-pixel image can be acquired by using the fast bilinear interpolation algorithm according to the pixel values of the original pixel points. Wherein, the arbitrary $R_i$ may be acquired by using the following equation:

$$R_i = Q_a \times q_a + Q_b \times q_b$$

where, $R_i$ is the interpolation; $Q_a$ is a pixel value of a first original pixel point; $q_a$ is a weight value of the first original pixel point, the weight value being acquired according to the preset compression ratio; $Q_b$ is a pixel value of a second original pixel point; and $q_b$ is a weight value of the second original pixel point, the weight value being acquired according to the preset compression ratio.

Optionally, during calculation of the interpolation corresponding to each pixel point after compression, a weight value of each row of original pixel points and a weight value of each column of original pixel points may be calculated first, and the calculated weight value of each row of original pixel points and the calculated weight value of each column of original pixel points are stored, such that in the calculation process of the interpolation, the weight value of an original pixel point can be invoked directly if the row number and column number of the original pixel point are known, and it is unnecessary to calculate the weight value of the original pixel point corresponding to each pixel point after compression, such that the efficiency of generating the low-pixel image is enhanced.

Optionally, during calculation the interpolation corresponding to each pixel point after compression, when a first interpolation or a second interpolation corresponding to an arbitrary compressed pixel point is obtained through calculation, the image processing device may locally buffer the first interpolation or the second interpolation. When original pixel points employed during calculation of an interpolation corresponding to another compressed pixel point are the same as the original pixel points corresponding to the arbitrary compressed pixel point, it is only necessary to directly invoke the first interpolation or second interpolation, without calculating again, such that the efficiency of acquiring the low-pixel image is shortened.

In the embodiment of the present application, the image processing device determines the pixel value of each pixel point after compression in the foregoing manner, and generates the low-pixel image according to the position and the pixel value of each pixel point after compression.

By means of the foregoing technical solution, the original image having a high resolution is converted into a low-pixel image, and each of the following steps for processing the image is based on the low-pixel image, such that the problem of a large amount of image processing caused by the overly large number of pixel points in the original image during the processing on the original image is avoided, the system processing burden is reduced, the image processing duration is shortened, and the image processing efficiency is enhanced.

In step 320, borderlines of the target image are determined in the acquired low-pixel image. Because the target image may include some specific graphic portions, the specific graphic portions may cause interference on the later detection process of the borderlines of the target image, causing an error in the detected borderlines of the target image. Therefore, when the borderlines of the target image are determined from the low-pixel image, it is necessary to first eliminate the specific graphic portions, to detect only the to-be-detected region that does not include the specific graphic portions, and determine the borderlines of the target image from the to-be-detected region. For example, for an original image including an ID card image, the ID card image is taken as a target image, and in this case, a portrait portion and a text portion included in the target image are the specific graphic portions.

Specifically, the low-pixel image is converted from a color image into a gray image, and the gray image is binarized to convert the low-pixel image into a binary image, wherein the binary image includes only two colors, and preferably, one of the two colors has a pixel value of 0 and the other of the two colors has a pixel value of 255. Edge detection processing is performed on the binary image, to acquire at least one edge line included in the binary image, and the edge detection processing may be canny edge detection processing. Each edge line is separately dilated. The each acquired edge line may have a crack, and in this case, each dilated edge line is connected, to acquire connected regions. All the connected regions are screened according to position information of each connected region respectively, to acquire a specific region, wherein the specific region is a specific graphic portion included in the target image. the portion other than the specific region in the low-pixel image is determined as the to-be-detected region. The position information is the position of each of the connected regions in the low-pixel image.

Optionally, the image processing device may perform edge detection processing on the binary image by using a preset edge detection parameter. The weaker the edge detection parameter is, the more the edge lines are detected; and the stronger the edge detection parameter is, the fewer the edge lines are detected. In addition, the image processing device may further dilate each edge line by using a preset dilation parameter, and the dilation parameter is adapted to the edge detection parameter. When the edge detection parameter is weaker and more edge lines are detected, a smaller dilation parameter is employed. When the edge detection parameter is stronger and fewer edge lines are detected, a greater dilation parameter is employed. Preferably, the dilation parameter is 5×5 or 3×3.

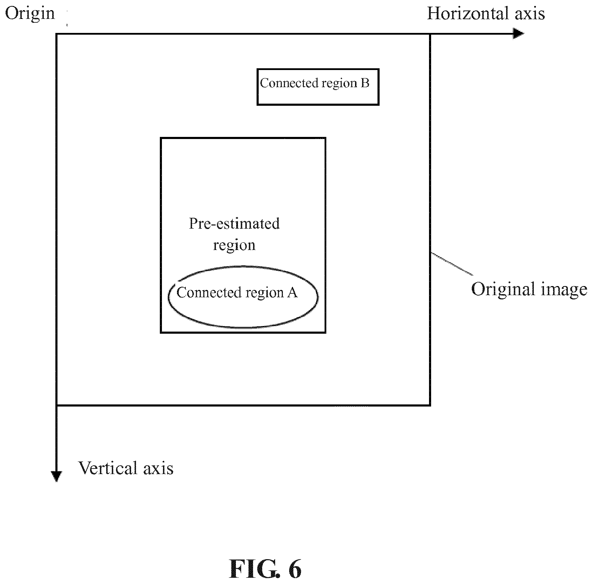

In the foregoing process, the screening all the connected regions according to position information of each connected region respectively, to acquire a specific region specifically includes: acquiring position information of each connected region, and acquiring a pre-estimated region of the target image, the pre-estimated region being a region that is pre-estimated using an existing technology. Any connected region, among all the connected regions, located within the pre-estimated region is determined as a specific region. Any connected region, among all the connected regions, located out of the pre-estimated region is determined as a non-specific region. For example, with reference to FIG. 6, after image processing is performed on the low-pixel image, a connected region A and a connected region B are acquired, and a pre-estimated region of the target image is C. It can be known from FIG. 6 that, the connected region A is located within the pre-estimated region C, and the connected region B is located out of the pre-estimated region C. Therefore, the connected region A is the specific region, and the connected region B is not the specific region.

Further, before performing the edge detection processing on the binary image, the image processing device may further perform Gauss smoothing on the binary image by using a first preset Gauss smoothing parameter. Wherein, the first preset Gauss smoothing parameter may be preset according to a specific application scenario. For example, the first preset Gauss smoothing parameter may be 5×5 or 3×3. By means of the technical solution, the Gauss smoothing is performed on the binary image before the edge detection processing is performed on the image, thereby filtering out a noise texture included in the binary image, avoiding the problem of a decrease in image processing accuracy caused by noise interference, and effectively enhancing the image processing accuracy.

By means of the foregoing technical solution, the specific region included in the low-pixel image is filtered out, and borderline detection is performed only on the to-be-detected region that does not include the specific region, thereby avoiding an image processing process performed by the image processing device on a non-region to be detected, and effectively improving the image processing efficiency. In addition, the image processing device performs borderline detection only on the to-be-detected region that does not include the specific region, avoiding the problem of determining a curve in the specific region as the borderline when a gradient value of a specific graph in the specific region satisfies a borderline detection condition, and effectively ensuring the accuracy of acquiring the target image.

In step 320, the image processing device calculates a gradient value between every two adjacent pixel points in the to-be-detected region, performs edge region detection on the to-be-detected region according to the calculated gradient value, and further determines the borderlines of the target image included in the low-pixel image.

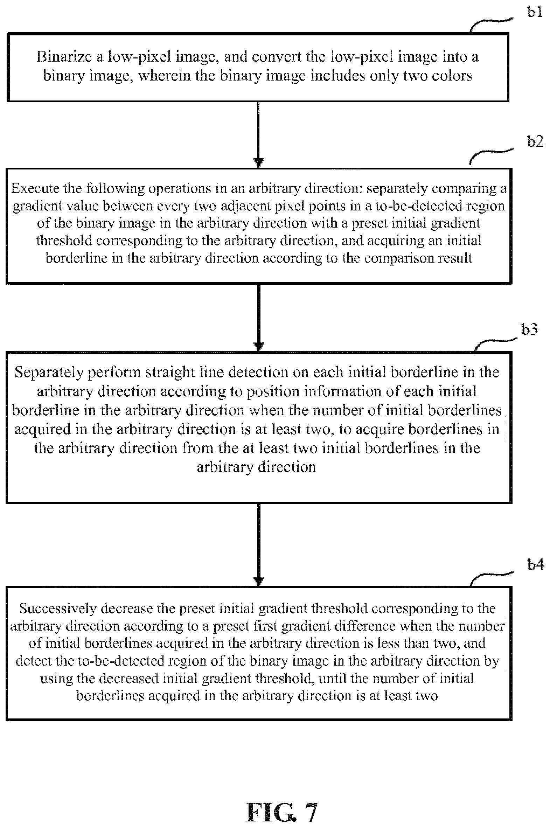

Specifically, with reference to FIG. 7, the process of determining the borderlines of the target image included in the low-pixel image is as follows:
Step b1. The low-pixel image is binarized, and the low-pixel image is converted into a binary image, wherein the binary image includes only two colors.

In the embodiment of the present application, the low-pixel image is converted from a color image into a binary image including only two colors; one of the two colors has a pixel value of 0 and the other of the two colors has a pixel value of 255. By means of the technical solution, the image processing device converts the color low-pixel image into the binary image, thereby reducing the complexity of performing borderline detection by using a gradient value, and increasing the image processing efficiency.

Further, the process of acquiring, by the image processing device, a gradient between every two adjacent pixel points includes: for two arbitrary adjacent pixel points that include a first pixel point and a second pixel point, acquiring a first color pixel value ($S_1$), a second color pixel value ($S_2$), and a third color pixel value ($S_3$) of the first pixel point, and acquiring a first color pixel value ($U_1$), a second color pixel value ($U_2$), and a third color pixel value ($U_3$) of the second pixel point; separately calculating an absolute value of a difference between the first color pixel value ($S_1$) of the first pixel point and the first color pixel value ($U_1$) of the second pixel point, an absolute value of a difference between the second color pixel value ($S_2$) of the first pixel point and the second color pixel value ($U_2$) of the second pixel point, and an absolute value of a difference between the third color pixel value ($S_3$) of the first pixel point and the third color pixel value ($U_3$) of the second pixel point, and taking the calculated three absolute values as the gradient value between the first pixel points. Specifically, the image processing device may calculate the gradient value between two arbitrary adjacent pixel points by using the following equation:

$$T = |S1 - U1| + |S2 - U2| + |S3 - U3|$$

where, T is the gradient value between the two arbitrary adjacent pixel points; $S_1$ is the first color pixel value of the first pixel point; $S_2$ is the second color pixel value of the first pixel point; $S_3$ is the third color pixel value of the first pixel point; $U_1$ is the first color pixel value of the second pixel point; $U_2$ is the second color pixel value of the second pixel point; and $U_3$ is the third color pixel value of the second pixel point. The two adjacent pixel points include two longitudinally adjacent pixel points, or two laterally adjacent pixel points.

In the embodiment of the present application, the original image consisting of only three basic colors is taken as an example for introducing the process of calculating the gradient value between every two adjacent pixel points, and when the original image includes four or more basic colors, the principle adopted during acquiring the gradient value between every two adjacent pixel points may be the same as that of acquiring the gradient value between every two adjacent pixel points from the original pixel consisting of the three basic colors. Details are not described herein again.

Step b2. The following operations are executed in an arbitrary direction: separately comparing a gradient value between every two adjacent pixel points in the to-be-detected region of the binary image in the arbitrary direction with a preset initial gradient threshold corresponding to the arbitrary direction, and acquiring an initial borderline in the arbitrary direction according to the comparison result.

In the embodiment of the present application, the target image is a closed quadrangle. Therefore, the terminal separately compares the gradient value between every two adjacent pixel points in the to-be-detected region of the binary image in the arbitrary direction with the preset initial gradient threshold corresponding to the arbitrary direction, and when gradient values between adjacent pixel points in any group of adjacent pixel points along the arbitrary direction are all greater than the preset initial gradient threshold, determines a line composed of one group of pixel points in the group of adjacent pixel points as the borderline in the arbitrary direction. Wherein, the arbitrary direction is a first direction or a second direction, the first direction being a direction from an origin along the positive direction of the horizontal axis, and the second direction being a direction from the origin along the positive direction of the vertical axis (a first solution); or, the first direction being a direction from the origin along the positive direction of the vertical axis, and the second direction being a direction from the origin along the positive direction of the horizontal axis (a second solution).

If the first solution is adopted, during acquisition of the borderline in the first direction, the image processing device needs to calculate a gradient value between every two longitudinally adjacent pixel points in the binary image, compare the acquired gradient value with a first initial gradient threshold, and determine, when the gradient value between every two longitudinally adjacent pixel points among all the pixel points in two arbitrary adjacent rows reaches the first initial gradient threshold, that a line formed by the upper row of pixel points in the two arbitrary adjacent rows is one initial borderline in the first direction. When a gradient value between any two longitudinally adjacent pixel points among all the pixel points in the two arbitrary adjacent rows does not reach the first initial gradient threshold, the image processing device continues to detect whether gradient values between the next two adjacent rows of pixel points all meet the borderline detection condition. Likewise, during acquisition of the borderline in the second direction, the image processing device needs to calculate a gradient value between every two laterally adjacent pixel points in the binary image, compare the acquired gradient value with a second initial gradient threshold, and determine, when the gradient value between every two laterally adjacent pixel points among all the pixel points in two arbitrary adjacent columns reaches the second initial gradient threshold, that a line on the left of the two arbitrary adjacent columns is one initial borderline in the second direction. When a gradient value between any two laterally adjacent pixel points among all the pixel points in the two arbitrary adjacent columns does not reach the second initial gradient threshold, the image processing apparatus continues to detect whether gradient values between the next two adjacent columns of pixel points all meet the borderline detection condition.

If the second solution is adopted, during acquisition of the borderline in the first direction, the image processing device, when acquiring the borderline in the first direction, needs to calculate a gradient value between every two laterally adjacent pixel points in the binary image, compare the acquired gradient value with a first initial gradient threshold, and determine, when the gradient value between every two laterally adjacent pixel points among all the pixel points in two arbitrary adjacent columns reaches the first initial gradient threshold, that a line on the left of the two arbitrary adjacent columns is one initial borderline in the first direction. When a gradient value between any two laterally adjacent pixel points among all the pixel points in the two arbitrary adjacent columns does not reach the first initial gradient threshold, the image processing device continues to detect whether gradient values between the next two adjacent columns of pixel points can all meet the borderline detection condition. Likewise, during acquisition of the borderline in the second direction, the image processing device needs to calculate a gradient value between every two longitudinally adjacent pixel points in the binary image, compare the acquired gradient value with a second initial gradient threshold, determine, when the gradient value between every two longitudinally adjacent pixel points among all the pixel points in two arbitrary adjacent rows reaches the second initial gradient threshold, that a line in the upper row of the two arbitrary adjacent rows is one initial borderline in the second direction. When a gradient value between any two longitudinally adjacent pixel points among all the pixel points in the two arbitrary adjacent rows does not reach the second initial gradient threshold, the image processing device continues to detect whether gradient values between the next two adjacent rows of pixel points all meet the borderline detection condition. Wherein, the first initial gradient threshold and the second initial gradient threshold are both values preset according to specific application scenarios, which may be equal to or unequal to each other.

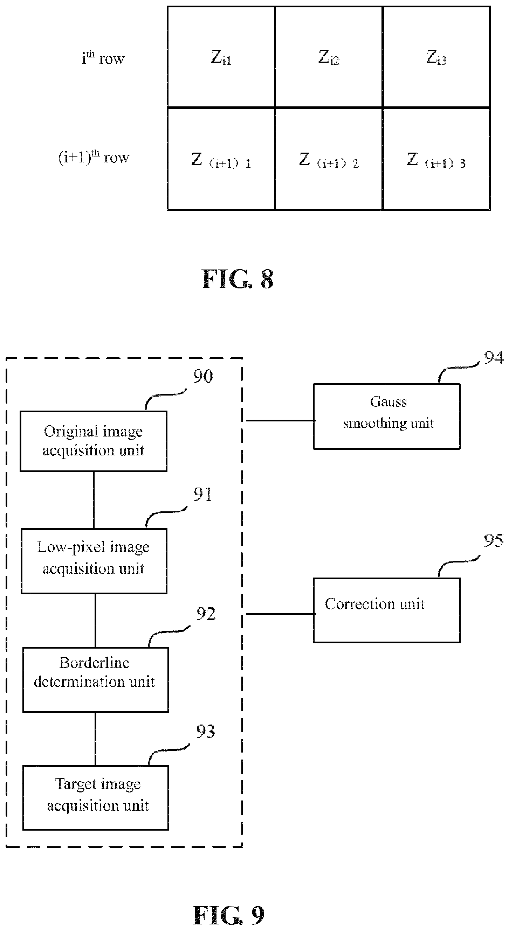

For example, with reference to FIG. 8, detection of a borderline in the first direction when the first direction is the positive direction of the horizontal axis is taken as an example: the $i^{th}$ row and the $(i+1)^{th}$ row in the binary image are two adjacent rows, and each row includes three pixel points, wherein, the $i^{th}$ row includes pixel points $Z_{i1}$, $Z_{i2}$, and $Z_{i3}$, the $(i+1)^{th}$ row includes pixel points $Z_{(i+1)1}$, $Z_{(i+i)2}$, and $Z_{(i+1)3}$, the first initial gradient threshold is T, $Z_{i1}$ and $Z_{(i+1)1}$ are two longitudinally adjacent pixel points, $Z_{i2}$ and $Z_{(i+1)2}$ are two longitudinally adjacent pixel points, $Z_{i3}$ and $Z_{(i+1)3}$ are two longitudinally adjacent pixel points, the gradient value between the pixel point $Z_{i1}$ and the pixel point $Z_{(i+1)1}$ is $T_1$, the gradient value between the pixel point $Z_{i2}$ and the pixel point $Z_{(i-1)2}$ is $T_2$, and the gradient value between the pixel point $Z_{i3}$ and the pixel point $Z_{(i+1)3}$ is $T_3$. When $T_1$, $T_2$, and $T_3$ are all greater than or equal to T, the $i^{th}$ row is determined as a borderline in the first direction. When at least one of $T_1$, $T_2$, and $T_3$ is smaller than T, it is continuously detected whether a borderline meeting the borderline condition exists between the $(i+1)^{th}$ row and the $(i+2)^{th}$ row.

Optionally, the image processing device, when detecting the borderline, may implement borderline detection by using a continuous Hough transform algorithm.

In the embodiment of the present application, the image processing device, before performing borderline detection on the to-be-detected region in the binary image, may further perform Gauss smoothing on the binary image by using a second preset Gauss smoothing parameter, and the second preset Gauss smoothing parameter may be preset according to a specific application scenario. For example, the first preset Gauss smoothing parameter may be $5 \times 5$ or $3 \times 3$. By means of the technical solution, the Gauss smoothing is performed on the binary image before the edge detection processing is performed on the image, thereby filtering out a noise texture included in the binary image, avoiding the problem of a decrease in image processing accuracy caused by noise interference, and effectively enhancing the image processing accuracy.

Step b3. Straight line detection is separately performed on each initial borderline in the arbitrary direction according to position information of each initial borderline in the arbitrary direction when the number of initial borderlines acquired in the arbitrary direction is at least two, to acquire borderlines in the arbitrary direction from the at least two initial borderlines in the arbitrary direction.

In the embodiment of the present application, the image processing device judges whether the number of initial borderlines acquired in an arbitrary direction is greater than or equal to two, and performs screening on the initial borderlines according to a position of each initial borderline when the number of initial borderlines acquired in the arbitrary direction is greater than or equal to two, to select borderlines in the arbitrary direction from all the initial borderlines.

Specifically, in the borderline detection process of the target image, when the detection result is that at least two initial borderlines in the first direction and at least two initial borderlines in the second direction are obtained, straight line detection is separately performed on each initial borderline in the first direction according to position information of each initial borderline in the first direction, to acquire two borderlines in the first direction from the at least two initial borderlines in the first direction, and straight line detection is separately performed on each initial borderline in the second direction according to position information of each initial borderline in the second direction, to acquire two borderlines in the second direction from the at least two initial borderlines in the second direction.

In the embodiment of the present application, the image processing device can detect in different directions to obtain multiple initial borderlines. Because the multiple initial borderlines may have an interference factor such as a background image, the multiple initial borderlines are not all borderlines of the target image, and at this time, it is necessary to detect all the acquired initial borderlines, to determine the borderlines of the target image.

Specifically, the image processing device executes the following operations for each initial borderline: the image processing device acquires position information of the initial borderline, the position information being a distance of the initial borderline in the low-pixel image from the horizontal axis, and a distance from the vertical axis. The image processing device acquires a pre-estimated region of the target image, and compares the position information of the initial borderline with the pre-estimated region. When matching between the position information of the initial borderline and the pre-estimated region is successful, the initial borderline is determined as a borderline of the target image. When the matching between the position information of the initial borderline and the pre-estimated region is unsuccessful, it is determined that the initial borderline is not a borderline of the target image. Wherein, the successful matching between the position information of the initial borderline and the pre-estimated region is that the distance of the initial borderline from the horizontal axis is equal to a distance of an arbitrary borderline of the pre-estimated region from the horizontal axis; or, the distance of the initial borderline from the vertical axis is equal to a distance of an arbitrary borderline of the pre-estimated region from the vertical axis.

Further, when there still exist multiple initial borderlines after the screening of the initial borderlines, the image processing device acquires a length of a line segment in each initial borderline between intersection points after the initial borderlines intersect with each other, screens out, from the multiple initial borderlines according to a ratio between sides of the target image, initial borderlines that are in different directions, meet the ratio between sides of the target image and have intersection points, to serve as the borderlines of the target image.

For example, the target image is an ID card image, the ID card having a length-width ratio of 4:3, the length of the first initial borderline in the first direction acquired by the image processing device is 8cm, and the length of the second initial borderline in the second direction and intersecting with the first initial borderline is 4cm. Because the length ratio of the first initial borderline to the second initial borderline is unequal to 4:3, the first initial borderline and the second initial borderline are not the borderlines of the target image. The length of the third initial borderline in the first direction acquired by the image processing device is 8cm, and the length of the fourth initial borderline in the second direction and intersecting with the first initial borderline is 6cm. Because the length ratio of the first initial borderline to the second initial borderline is equal to 4:3, the first initial borderline and the second initial borderline are the borderlines of the target image.

By means of the technical solution, multiple limitation conditions are adopted to acquire the borderlines of the target image from the initial borderlines, to ensure the accuracy of the acquired borderlines of the target image.

Step b4. The preset initial gradient threshold corresponding to the arbitrary direction is successively decreased according to a preset first gradient difference when the number of initial borderlines acquired in the arbitrary direction is less than two, and the to-be-detected region of the binary image is detected in the arbitrary direction by using the decreased initial gradient threshold, until the number of initial borderlines acquired in the arbitrary direction is no less than two.

In the embodiment of the present application, the preset initial gradient threshold is decreased when the number of initial borderlines acquired in the arbitrary direction is less than a preset number, and edge region detection is performed again by using the decreased initial gradient threshold. When the number of borderlines that can be acquired in the arbitrary direction is still less than two, the process is repeated to decrease the preset initial gradient threshold again, until the number of initial borderlines acquired in the arbitrary direction is no less than two, and screening is performed on the initial borderlines according to the position of each initial borderline, to select borderlines in the arbitrary direction from all the initial borderlines.

Specifically, in the borderline detection process of the target image, when the detection result is that at least two initial borderlines in first direction cannot be acquired, the first initial gradient threshold is successively decreased according to a preset first gradient difference, until the number of initial borderlines acquired in the first direction is at least two. If multiple initial borderlines are acquired in the first direction, straight line detection is separately performed on each initial borderline in the first direction according to the position information of each initial borderline in the first direction, to acquire two borderlines in the first direction from the multiple initial borderlines in the first direction. Likewise, when the detection result is that at least two initial borderlines in the second direction cannot be acquired, and the second initial gradient threshold is successively decreased according to a preset second gradient difference, until at least two initial borderlines in the second direction are acquired. If multiple initial borderlines in the second direction are acquired, straight line detection is separately performed on each initial borderline in the second direction according to the position information of each initial borderline in the second direction, to acquire two borderlines in the second direction from the multiple initial borderlines in the second direction.

In the embodiment of the present application, if the first direction is the positive direction of the horizontal axis, and the second direction is the positive direction of the vertical axis, when the image processing device, after successively calculating a gradient between every two adjacent rows of pixel points in the first direction, determines that there is no gradient value between any two adjacent rows of pixel points that meets a preset first gradient threshold, the image processing device decreases the first initial gradient threshold according to a preset first gradient difference, and executes the foregoing process again. When being able to acquire two initial borderlines in the first direction according to the decreased gradient threshold, the image processing device terminates the process. When being unable to acquire two initial borderlines in the first direction according to the decreased gradient threshold, the image processing device decreases the first initial gradient threshold according to the preset first gradient difference again, until two initial borderlines in the first direction can be acquired according to the decreased gradient threshold. Likewise, when the image processing device, after successively calculating a gradient between every two adjacent columns of pixel points in the second direction, determines that there is no gradient value between any two adjacent columns of pixel points that meets a preset second gradient threshold, the image processing device decreases the second initial gradient threshold according to a preset second gradient difference, and executes the foregoing process again. When being able to acquire two initial borderlines in the second direction according to the decreased gradient threshold, the image processing device terminates the process. When being unable to acquire two initial borderlines in the second direction according to the decreased gradient threshold, the image processing device decreases the second initial gradient threshold again according to the preset second gradient difference, until two initial borderlines in the second direction can be acquired according to the decreased gradient threshold.

Further, if the first direction is the positive direction of the vertical axis, and the second direction is the positive direction of the horizontal axis, the manner of acquiring, by the image processing device, the borderlines of the target image is the same as that in the case where the first direction is the positive direction of the horizontal axis, and the second direction is the positive direction of the vertical axis. Details are not described herein again.

Wherein, the first preset gradient difference is a preset value according to a specific application scenario. For example, the value is 10.

In step 330, position information of intersection points of the borderlines included in the low-pixel image is acquired. The acquired intersection points are separately mapped into the original image according to the preset compression ratio. The points mapped from the intersection points into the original image are successively connected, and a quadrangle generated after the connection is determined as the target image included in the original image. Wherein, an inverse process of the fast bilinear interpolation algorithm in step 310 may be adopted to map each of the intersection points to the original image.

Further, after the target image included in the original image is acquired, the target image is corrected by using a projective transformation algorithm. Specifically, due to the shooting angle, the shape of the target image in the original image may have some differences with the shape of the target object. For example, the target object is an ID card, the shape of which is a rectangle, while the target image is a parallel quadrangle. Therefore, the image processing device corrects the target image by using a projective transformation algorithm: an arbitrary intersection point among all the intersection points is taken as a vertex, a distance between the vertex and an arbitrary adjacent vertex is taken as an arbitrary side length of the target image, other vertexes of the target image are determined according to a length-width ratio of the target image, and after all the vertexes are connected successively, the graph formed is the corrected target image.

By means of the technical solution, the original image may be a color image or a gray image, the form of the original image is not limited, and high universality is achieved, Moreover, the initial borderline of the target image is determined according to the gradient value between two adjacent pixel points, and the acquired initial borderlines are screened according to the shape of the target object and the position information of the acquired initial borderlines, to determine the borderlines of the target image, thus avoiding the problem of interference from a background image on the target image when the background image is quite similar to the target image, and ensuring the accuracy of the acquired target image. In addition, when the image processing device is a mobile terminal, by means of the foregoing technical solution, the process of acquiring the target image and the correction process only require 600 ms, such that image processing is fast.

In the embodiment of the present application, when the image processing device is a mobile terminal, the technical solution is applicable to an Android system, an IOS system, and other various operating systems.

Based on the technical solution above, with reference to FIG. 9, an embodiment of the present application further provides an image acquisition apparatus, including an original image acquisition unit 90, a low-pixel image acquisition unit 91, a borderline determination unit 92, and a target image acquisition unit 93, wherein:

the original image acquisition unit 90 is configured to acquire an original image, wherein the original image includes a target image;

the low-pixel image acquisition unit 91 is configured to perform image compression processing on the original image according to a preset compression ratio, to acquire a low-pixel image after image compression processing;

the borderline determination unit 92 is configured to determine borderlines of the target image in the low-pixel image;

the target image acquisition unit 93 is configured to map the determined borderlines included in the low-pixel image into the original image, to acquire the target image included in the original image.

Wherein, the low-pixel image acquisition unit 91 is specifically configured to: determine a position of each pixel point after compression according to the preset compression ratio; perform image compression processing on the original image by using a fast bilinear interpolation algorithm, to acquire a pixel value of each pixel point after compression, and generate the low-pixel image according to the pixel value and the position each pixel point after compression.

Optionally, the performing, by the low-pixel image acquisition unit 91, image compression processing on the original image by using the fast bilinear interpolation algorithm, to acquire the pixel value of each pixel point after compression specifically includes: determining, among all original pixel points included in the original image, four original pixel points corresponding to each pixel point after compression according to the preset compression ratio; determining, among the four original pixel points corresponding to each pixel point after compression, two pairs of original pixel points in a first direction and two pairs of original pixel points in a second direction, wherein the first direction is a horizontal direction and the second direction is a vertical direction, or, the first direction is a vertical direction and the second direction is a horizontal direction; acquiring first interpolations respectively corresponding to the two pairs of original pixel points of each pixel point after compression in the first direction, and taking the acquired two first interpolations as initial interpolations; or, acquiring second interpolations respectively corresponding to the two pairs of original pixel points of each pixel point after compression in the second direction, and taking the acquired two second interpolations as initial interpolations; and calculating an interpolation corresponding to each pixel point after compression according to the initial interpolations corresponding to each pixel point after compression, and determining the pixel value of each pixel point after compression according to the calculated interpolation corresponding to each pixel point after compression.

Optionally, the borderline determination unit 92 is configured to: determine a to-be-detected region from the low-pixel image; and perform borderline detection processing on the to-be-detected region according to a gradient value between every two adjacent pixel points in the to-be-detected region, to determine the borderlines of the target image.

Optionally, the determining, by the borderline determination unit 92, a to-be-detected region from the low-pixel image specifically includes: binarizing the low-pixel image, to convert the low-pixel image into a binary image, wherein the binary image includes only two colors; performing edge detection processing on the binary image to acquire at least one edge line included in the binary image; separately dilating each edge line; connecting each dilated edge line, to acquire connected regions; screening the connected regions according to position information of each connected region respectively, to acquire a specific region, wherein the specific region is a region including a specific graphic portion in the target image; and determining a region other than the specific region in the low-pixel image as the to-be-detected region.

Further, a Gauss smoothing unit 94 is further included, which is configured to: perform Gauss smoothing on the binary image by using a preset Gauss smoothing parameter before the edge detection processing is performed on the binary image.

Optionally, the performing, by the borderline determination unit 92, borderline detection on the to-be-detected region according to a gradient value between every two adjacent pixel points in the to-be-detected region, to determine the borderlines of the target image specifically includes: binarizing the low-pixel image, to convert the low-pixel image into a binary image, wherein the binary image includes only two colors; and executing the following operations in an arbitrary direction: separately comparing a gradient value between every two adjacent pixel points in the to-be-detected region of the binary image in the arbitrary direction with a preset initial gradient threshold corresponding to the arbitrary direction, and acquiring an initial borderline in the arbitrary direction according to the comparison result; and determining the borderlines of the target image respectively according to the number of initial borderlines acquired in each direction.

Optionally, the determining, by the borderline determination unit 92, the borderlines of the target image respectively according to the number of initial borderlines acquired in each direction specifically includes: executing the following operations for the detection result in an arbitrary direction: separately performing straight line detection on each initial borderline in the arbitrary direction according to position information of each initial borderline in the arbitrary direction when the number of initial borderlines acquired in the arbitrary direction is at least two, to acquire borderlines in the arbitrary direction from at least two initial borderlines in the arbitrary direction; successively decreasing the preset initial gradient threshold corresponding to the arbitrary direction according to a preset first gradient difference when the number of initial borderlines acquired in the arbitrary direction is less than two, and detecting the to-be-detected region of the binary image in the arbitrary direction by using the decreased initial gradient threshold, until the number of initial borderlines acquired in the arbitrary direction is at least two.

Optionally, the target image acquisition unit 93 is specifically configured to: acquire an intersection point of every two adjacent borderlines included in the low-pixel image; separately map the acquired intersection points into the original image according to the preset compression ratio; and successively connect the points mapped into the original image, and determine a quadrangle generated after the connection as the target image included in the original image.

Optionally, the apparatus further includes a correction unit 95 configured to: correct the target image by using a projective transformation algorithm after the target image included in the original image is acquired.

The image acquisition apparatus may be one part located in the image processing device; or, the image acquisition apparatus is the image processing device.

In conclusion, in the embodiment of the present application, an original image is acquired; image compression processing is performed on the original image according to a preset compression ratio, to acquire a low-pixel image after image compression processing; a to-be-detected region is acquired from the low-pixel image, wherein the to-be-detected region is a region not including a specific graphic portion; borderline detection is performed on the to-be-detected region according to a gradient value between every two adjacent pixel points in the to-be-detected region, to determine borderlines of the target image included in the low-pixel image; and the borderlines included in the low-pixel image are mapped into the original image, to acquire the target image included in the original image. By means of the technical solution of the present application, the processes of converting the original image into the low-pixel image and acquiring the borderlines of the target image are both based on the low-pixel image, and because the low-pixel image includes fewer pixel points, the duration of processing the low-pixel image is shortened, and the efficiency of acquiring the target image is enhanced. Moreover, because the specific region is an interference factor, the portion that does not include the specific region in the low-pixel image is taken as the to-be-detected region, i.e., the interference factor in the low-pixel image is filtered out, and only the to-be-detected region is detected, such that the image processing accuracy can be ensured while the image processing duration is shortened. In addition, the borderlines of the target image are determined according to changes in the gradient value between every two adjacent pixel points in to-be-detected region, and the obtained borderlines are mapped into the original image, such that the target image in the original image is determined. Thereby, the problem of differences existing between the acquired target image in the low-pixel image and the target image in the original image is avoided, and the accuracy of acquiring the target image is ensured.

Persons skilled in the art should understand that, the embodiments of the present application may be provided as a method, a system, or a computer program product. Therefore, the embodiments of the present application may be implemented in the form of a complete hardware embodiment, a complete software embodiment, or an embodiment combing software and hardware. Moreover, the present application may employ the form of a computer program product implemented on one or four computer usable storage media (including, but not limited to, a magnetic disk memory, a CD-ROM, an optical memory, and the like) including computer usable program code.

The present application is described with reference to flowcharts and/or block diagrams of the method, device (system), and computer program product according to the embodiments of the present application. It should be understood that computer program instructions may be used to implement each process and/or block in the flowcharts and/or block diagrams and a combination of a process and/or a block in the flowcharts and/or the block diagrams. These computer program instructions may be provided for a general-purpose computer, a special-purpose computer, an embedded processor, or a processor of any other programmable processing device to generate a machine, so that the instructions executed by a computer or a processor of any other programmable processing device generate an apparatus for implementing a specified function in one or four processes in the flowcharts and/or in one or four blocks in the block diagrams.

These computer program instructions may also be stored in a computer readable memory that can instruct the computer or any other programmable processing device to work in a particular manner, such that the instructions stored in the computer readable memory generate an artifact that includes an instruction apparatus. The instruction apparatus implements a specified function in one or four processes in the flowcharts and/or in one or four blocks in the block diagrams.

These computer program instructions may also be loaded onto a computer or another programmable data processing terminal device, such that a series of operations and steps are performed on the computer or another programmable terminal device, thereby generating computer-implemented processing. Therefore, the instructions executed on the computer or another programmable device provide steps for implementing a specified function in one or four processes in the flowcharts and/or in one or four blocks in the block diagrams.

Although preferred embodiments of the embodiments of the present application have been described, those skilled in the art may make other changes and modifications to these embodiments once knowing the basic inventive concept. Therefore, the appended claims are intended to be interpreted as including the preferred embodiments and all changes and modifications falling into the scope of the appended claims.

Apparently, those skilled in the art can make various amendments and modifications on the embodiments of the present application without departing from the scope of the appended claims.

## Claims

1. An image processing method, comprising:

acquiring an original image; wherein the original image comprises a target image (300);
performing image compression processing on the original image according to a preset compression ratio, to acquire a low-resolution image after the image compression processing (310), wherein performing the image compression processing on the original image according to the preset compression ratio specifically comprises

a) determining a position of each pixel point after compression according to the preset compression ratio,
b) performing image compression processing on the original image by using a fast bilinear interpolation algorithm, to acquire a pixel value of each pixel point after compression, wherein performing the image compression processing comprises:

i) determining, among all original pixel points comprised in the original image, four original pixel points corresponding to each pixel point after compression according to the preset compression ratio,
ii) determining, among the four original pixel points corresponding to each pixel point after compression, two pairs of original pixel points in a first direction and two pairs of original pixel points in a second direction, wherein the first direction is a horizontal direction and the second direction is a vertical direction, or, the first direction is a vertical direction and the second direction is a horizontal direction,

iii) acquiring first interpolations respectively corresponding to the two pairs of original pixel points of each pixel point after compression in the first direction, and taking the acquired two first interpolations as initial interpolations; or, acquiring second interpolations respectively corresponding to the two pairs of original pixel points of each pixel point after compression in the second direction, and taking the acquired two second interpolations as initial interpolations, and

iv) calculating an interpolation corresponding to each pixel point after compression according to the initial interpolations corresponding to each pixel point after compression, and determining the pixel value of each pixel point after compression according to the calculated interpolation corresponding to each pixel point after compression, and

g) generating the low-resolution image according to the pixel value and the position of each pixel point after compression; determining borderlines of the target image in the low-resolution image (320), wherein determining the borderlines of the target image comprises

N) determining a to-be-detected region of the target image from the low-resolution image, wherein the to-be-detected region does not include specific graphic portions of the target image that cause interference on detecting the borderlines of the target image, and

M) performing borderline detection processing on the to-be-detected region according to a gradient value between every two adjacent pixel points in the to-be-detected region, to determine the borderlines of the target image, wherein the specific graphic portions are determined by screening connected regions detected at the low-resolution image according to position information of positions of each connected region in the low-resolution image; and mapping the determined borderlines comprised in the low-resolution image into the original image, to acquire the target image comprised in the original image (330), wherein mapping the determined borderlines comprised in the low-resolution image into the original image comprises

A) acquiring an intersection point of every two adjacent borderlines comprised in the low-resolution image, B) separately mapping the acquired intersection points into the original image according to the preset compression ratio, to generate corresponding mapping points in the original image, and C) successively connecting the mapping points mapped into the original image, and determining a quadrangle generated after the connection as the target image comprised in the original image.

2. The method of claim 1, wherein the determining a to-be-detected region from the low-resolution image specifically comprises:

binarizing the low-resolution image to convert the low-resolution image into a binary image, wherein the binary image comprises only two colors; performing edge detection processing on the binary image, to acquire at least one edge line comprised in the binary image; separately dilating each edge line; connecting each dilated edge line to acquire connected regions; screening the connected regions according to position information of each connected region respectively, to acquire a specific region, wherein the specific region is a region comprising a specific graphic portion in the target image; and determining a region other than the specific region in the low-resolution image as the to-be-detected region.

3. The method of claim 2, wherein, before performing the edge detection processing on the binary image, the method further comprises performing Gaussian smoothing on the binary image by using a preset Gauss smoothing parameter.

4. The method of claim 1, wherein performing the borderline detection processing on the to-be-detected region according to a gradient value between every two adjacent pixel points in the to-be-detected region, to determine the borderlines of the target image specifically comprises:

binarizing the low-resolution image to convert the low-resolution image into a binary image, wherein the binary image comprises only two colors; executing the following operations in an arbitrary direction: separately comparing a gradient value between every two adjacent pixel points in the to-be-detected region of the binary image in the arbitrary direction with a preset initial gradient threshold corresponding to the arbitrary direction, and acquiring an initial borderline in the arbitrary direction according to the comparison result; and
determining the borderlines of the target image respectively according to the number of initial borderlines acquired in each direction.

5. The method of claim 4, wherein determining the borderlines of the target image respectively according to the number of initial borderlines acquired in each direction specifically comprises:

executing the following operation for a detection result in an arbitrary direction;
separately performing straight line detection on each initial borderline in the arbitrary direction according to position information of each initial borderline in the arbitrary direction when the number of initial borderlines acquired in the arbitrary direction is at least two, to acquire borderlines in the arbitrary direction from the at least two initial borderlines in the arbitrary direction.

6. The method of claim 4, wherein determining the borderlines of the target image respectively according to the number of initial borderlines acquired in each direction specifically comprises:

executing the following operation for a detection result in an arbitrary direction,
successively decreasing the preset initial gradient threshold corresponding to the arbitrary direction according to a preset first gradient difference when the number of initial borderlines acquired in the arbitrary direction is less than two, and detecting the to-be-detected region of the binary image in the arbitrary direction by using the decreased initial gradient threshold, until the number of initial borderlines acquired in the arbitrary direction is at least two.

7. The method of claim 1, after acquiring the target image comprised in the original image, the method further comprises:
correcting the target image by using a projective transformation algorithm.

8. An image processing apparatus comprising means for carrying out the method of any one of claims 1 to 7.

**Patentansprüche**

1. Bildverarbeitungsverfahren, umfassend:

Erlangen eines Originalbilds; wobei das Originalbild ein Zielbild umfasst (300);
Durchführen einer Bildkompressionsverarbeitung an dem Originalbild gemäß einem voreingestellten Kompressionsverhältnis, um nach der Bildkompressionsverarbeitung ein Bild mit niedriger Auflösung zu erlangen (310), wobei das Durchführen der Bildkompressionsverarbeitung an dem Originalbild gemäß dem voreingestellten Kompressionsverhältnis spezifisch umfasst:

a) Bestimmen einer Position jedes Pixelpunkts nach der Kompression gemäß dem voreingestellten Kompressionsverhältnis;
b) Durchführen einer Bildkompressionsverarbeitung an dem Originalbild durch Verwenden eines schnellen bilinearen Interpolationsalgorithmus, um einen Pixelwert jedes Pixelpunkts nach der Kompression zu erlangen, wobei das Durchführen der Bildkompressionsverarbeitung umfasst:

i) Bestimmen von vier Originalpixelpunkten, die jedem Pixelpunkt nach der Kompression gemäß dem voreingestellten Kompressionsverhältnis entsprechen, aus allen Originalpixelpunkten, die von dem Originalbild umfasst sind,
ii) Bestimmen von zwei Paaren von Originalpixelpunkten in einer ersten Richtung und zwei Paaren von Originalpixelpunkten in einer zweiten Richtung aus den vier Originalpixelpunkten, die jedem Pixelpunkt nach der Kompression entsprechen, wobei die erste Richtung eine horizontale Richtung ist und die zweite Richtung eine vertikale Richtung ist oder die erste Richtung eine vertikale Richtung ist und die zweite Richtung eine horizontale Richtung ist,
iii) Erlangen von ersten Interpolationen, die jeweils den zwei Paaren von Originalpixelpunkten von jedem Pixelpunkt nach der Kompression in der ersten Richtung entsprechen, und Nehmen der erlangten zwei ersten Interpolationen als anfängliche Interpolationen; oder Erlangen von zweiten Interpolationen, die jeweils den zwei Paaren von Original pixelpunkten von jedem Pixelpunkt nach der Kompression in der zweiten Richtung entsprechen, und Nehmen der erlangten zwei zweiten Interpolationen als anfängliche Interpolationen und
iv) Berechnen einer Interpolation, die jedem Pixelpunkt nach der Kompression entspricht, gemäß den anfänglichen Interpolationen, die jedem Punkt nach der Kompression entsprechen, und Bestimmen des Pixelwerts jedes Pixelpunkts nach der Kompression gemäß der berechneten Interpolation, die jedem Pixelpunkt nach der Kompression entspricht, und

g) Erzeugen des Bilds mit niedriger Auflösung gemäß dem Pixelwert und der Position jedes Pixelpunkts nach der Kompression;
Bestimmen von Randlinien des Zielbilds in dem Bild mit niedriger Auflösung (320), wobei das Bestimmen der Randlinien des Zielbilds umfasst:

N) Bestimmen einer zu erkennenden Region des Zielbilds aus dem Bild mit niedriger Auflösung, wobei die zu erkennende Region keine spezifischen Grafikabschnitte des Zielbilds beinhaltet, die eine Störung beim Erkennen der Randlinien des Zielbilds verursachen, und
M) Durchführen einer Randlinienerkennungsverarbeitung an der zu erkennenden Region gemäß einem Gradientenwert zwischen jeweils zwei benachbarten Pixelpunkten in der zu erkennenden Region, um die Randlinien des Zielbilds zu bestimmen, wobei die spezifischen Grafikabschnitte durch Überprüfen von verbundenen Regionen, die an dem Bild mit niedriger Auflösung erkannt werden, gemäß Positionsinformationen jeder verbundenen Region in dem Bild mit niedriger Auflösung bestimmt werden; und

Abbilden der bestimmten Randlinien, die von dem Bild mit niedriger Auflösung umfasst sind, in das Originalbild, um das Zielbild, das von dem Originalbild umfasst ist, zu erlangen (330), wobei das Abbilden der bestimmten Randlinien, die von dem Bild mit niedriger Auflösung umfasst sind, in das Originalbild umfasst:

A) Erlangen eines Kreuzungspunkts von jeweils zwei benachbarten Randlinien, die von dem Bild mit niedriger Auflösung umfasst sind,
B) separates Abbilden der erlangten Kreuzungspunkte in das Originalbild gemäß dem voreingestellten Kompressionsverhältnis, um entsprechende Abbildungspunkte in dem Originalbild zu erzeugen, und
C) sukzessives Verbinden der Abbildungspunkte, die in das Originalbild abgebildet wurden, und Bestimmen eines Vierecks, das nach der Verbindung erzeugt wurde, als das Zielbild, das von dem Originalbild umfasst ist.

2. Verfahren nach Anspruch 1, wobei das Bestimmen einer zu erkennenden Region aus dem Bild mit niedriger Auflösung spezifisch umfasst:

Binarisieren des Bilds mit niedriger Auflösung, um das Bild mit niedriger Auflösung in ein binäres Bild umzuwandeln, wobei das binäre Bild nur zwei Farben umfasst;
Durchführen einer Kantenerkennungsverarbeitung an dem binären Bild, um mindestens eine Kantenlinie, die von dem binären Bild umfasst ist, zu erlangen;
separates Erweitern jeder Kantenlinie;
Verbinden jeder erweiterten Kantenlinie, um verbundene Regionen zu erlangen;
Überprüfen der verbundenen Regionen gemäß Positionsinformationen von jeweils jeder verbundenen Region, um eine spezifische Region zu erlangen, wobei die spezifische Region eine Region ist, die einen spezifischen Grafikabschnitt in dem Zielbild umfasst; und
Bestimmen einer Region, bei der es sich nicht um die spezifische Region handelt, in dem Bild mit niedriger Auflösung als die zu erkennende Region.

3. Verfahren nach Anspruch 2, wobei das Verfahren vor dem Durchführen der Kantenerkennungsverarbeitung an dem binären Bild weiterhin ein Durchführen einer Gauß-Glättung an dem binären Bild durch Verwenden eines voreingestellten Gauß-Glättungsparameters umfasst.

4. Verfahren nach Anspruch 1, wobei das Durchführen der Randlinienerkennungsverarbeitung an der zu erkennenden Region gemäß einem Gradientenwert zwischen jeweils zwei benachbarten Pixelpunkten in der zu erkennenden Region, um die Randlinien des Zielbilds zu bestimmen, spezifisch umfasst:

Binarisieren des Bilds mit niedriger Auflösung, um das Bild mit niedriger Auflösung in ein binäres Bild umzuwandeln, wobei das binäre Bild nur zwei Farben umfasst;
Ausführen der folgenden Arbeitsvorgänge in einer willkürlichen Richtung:

separates Vergleichen eines Gradientenwerts zwischen jeweils zwei benachbarten Pixelpunkten in der zu erkennenden Region des binären Bilds in der willkürlichen Richtung mit einem voreingestellten anfänglichen Gradientengrenzwert, der der willkürlichen Richtung entspricht, und Erlangen einer anfänglichen Randlinie in der willkürlichen Richtung gemäß dem Vergleichsergebnis und

Bestimmen der Randlinien des Zielbilds jeweils gemäß der Anzahl von anfänglichen Randlinien, die in jeder Richtung erlangt wurden.

**5.** Verfahren nach Anspruch 4, wobei das Bestimmen der Randlinien des Zielbilds jeweils gemäß der Anzahl von anfänglichen Randlinien, die in jeder Richtung erlangt wurden, spezifisch umfasst:

Ausführen des folgenden Arbeitsvorgangs für ein Erkennungsergebnis in einer willkürlichen Richtung;

separates Durchführen einer Erkennung von geraden Linien an jeder anfänglichen Randlinie in der willkürlichen Richtung gemäß Positionsinformationen jeder anfänglichen Randlinie in der willkürlichen Richtung, wenn die Anzahl von anfänglichen Randlinien, die in der willkürlichen Richtung erlangt wurden, mindestens zwei ist, um Randlinien in der willkürlichen Richtung aus den mindestens zwei anfänglichen Randlinien in der willkürlichen Richtung zu erlangen.

**6.** Verfahren nach Anspruch 4, wobei das Bestimmen der Randlinien des Zielbilds jeweils gemäß der Anzahl von anfänglichen Randlinien, die in jeder Richtung erlangt wurden, spezifisch umfasst:

Ausführen des folgenden Arbeitsvorgangs für ein Erkennungsergebnis in einer willkürlichen Richtung,

sukzessives Senken des voreingestellten anfänglichen Gradientengrenzwerts, der der willkürlichen Richtung entspricht, gemäß einer voreingestellten ersten Gradientendifferenz, wenn die Anzahl von anfänglichen Randlinien, die in der willkürlichen Richtung erlangt wurden, weniger als zwei beträgt, und Erkennen der zu erkennenden Region des binären Bilds in der willkürlichen Richtung durch Verwenden des gesenkten anfänglichen Gradientengrenzwerts, bis die Anzahl von anfänglichen Randlinien, die in der willkürlichen Richtung erlangt wurden, mindestens zwei ist.

**7.** Verfahren nach Anspruch 1, wobei das Verfahren nach dem Erlangen des Zielbilds, das von dem Originalbild umfasst ist, weiterhin umfasst:
Korrigieren des Zielbilds durch Verwenden eines projektiven Transformationsalgorithmus.

**8.** Bildverarbeitungsvorrichtung, die Mittel zum Ausführen des Verfahrens nach einem der Ansprüche 1 bis 7 umfasst.

**Revendications**

**1.** Procédé de traitement d'image, consistant à :

acquérir une image d'origine ; l'image d'origine comprenant une image cible (300) ;
effectuer un traitement de compression d'image sur l'image d'origine selon un taux de compression prédéfini, pour acquérir une image basse résolution après le traitement de compression d'image (310), la réalisation du traitement de compression d'image sur l'image d'origine selon le taux de compression prédéfini consistant spécifiquement à

a) déterminer une position de chaque point de pixel après compression selon le taux de compression prédéfini,
b) effectuer un traitement de compression d'image sur l'image d'origine en utilisant un algorithme d'interpolation bilinéaire rapide, pour acquérir une valeur de pixel de chaque point de pixel après compression, la réalisation du traitement de compression d'image consistant à :

i) déterminer, parmi tous les points de pixel d'origine compris dans l'image d'origine, quatre points de pixel d'origine correspondant à chaque point de pixel après compression selon le taux de compression prédéfini,
ii) déterminer, parmi les quatre points de pixel d'origine correspondant à chaque point de pixel après compression, deux paires de points de pixel d'origine dans une première direction et deux paires de points de pixel d'origine dans une seconde direction, la première direction étant une direction horizontale et la seconde direction étant une direction verticale, ou la première direction étant une direction verticale et la seconde direction étant une direction horizontale,
iii) acquérir les premières interpolations correspondant respectivement aux deux paires de points de pixel d'origine de chaque point de pixel après compression dans la première direction, et prendre les deux premières interpolations acquises comme interpolations initiales ; ou, acquérir des secondes interpolations correspondant respectivement aux deux paires de points de pixels d'origine de chaque point de pixel après compression dans la seconde direction, et prendre les deux secondes interpolations acquises comme interpolations initiales, et

iv) calculer une interpolation correspondant à chaque point de pixel après compression selon les interpolations initiales correspondant à chaque point de pixel après compression, et déterminer la valeur de pixel de chaque point de pixel après compression selon l'interpolation calculée correspondant à chaque point de pixel après compression, et

g) générer l'image basse résolution selon la valeur de pixel et la position de chaque point de pixel après compression ; déterminer les limites de l'image cible dans l'image basse résolution (320), la détermination des limites de l'image cible consistant à

    N) déterminer une région à détecter de l'image cible à partir de l'image basse résolution, la région à détecter ne comprenant pas de parties graphiques spécifiques de l'image cible qui provoquent des interférences lors de la détection des limites de l'image cible, et
    M) effectuer un traitement de détection des limites sur la région à détecter selon une valeur de gradient entre tous les deux points de pixels adjacents dans la région à détecter, pour déterminer les limites de l'image cible, les parties graphiques spécifiques étant déterminées en filtrant les régions connectées détectées au niveau de l'image basse résolution selon les informations de position des positions de chaque région connectée dans l'image basse résolution ; et
    mapper dans l'image d'origine les limites déterminées comprises dans l'image basse résolution, pour acquérir l'image cible comprise dans l'image d'origine (330), le mappage dans l'image d'origine des limites déterminées comprises dans l'image basse résolution consistant à

    A) acquérir un point d'intersection de deux limites adjacentes comprises dans l'image basse résolution,
    B) mapper séparément les points d'intersection acquis dans l'image d'origine selon le taux de compression prédéfini, pour générer des points de mappage correspondants dans l'image d'origine, et
    C) connecter successivement les points de mappage mappés dans l'image d'origine et déterminer un quadrilatère généré après la connexion en tant qu'image cible comprise dans l'image d'origine.

**2.** Procédé selon la revendication 1, dans lequel la détermination d'une région à détecter à partir de l'image basse résolution consiste spécifiquement à :

    binariser l'image basse résolution pour convertir l'image basse résolution en une image binaire, l'image binaire ne comprenant que deux couleurs ;
    effectuer un traitement de détection de bord sur l'image binaire, pour acquérir au moins une ligne de bord comprise dans l'image binaire ;
    dilater séparément chaque ligne de bord ;
    connecter chaque ligne de bord dilatée pour acquérir des régions connectées ;
    filtrer les régions connectées selon les informations de position de chaque région connectée respectivement, pour acquérir une région spécifique, la région spécifique étant une région comprenant une partie graphique spécifique dans l'image cible ; et
    déterminer une région autre que la région spécifique dans l'image basse résolution en tant que région à détecter.

**3.** Procédé selon la revendication 2, dans lequel, avant d'effectuer le traitement de détection de bord sur l'image binaire, le procédé consiste en outre à exécuter un lissage gaussien sur l'image binaire en utilisant un paramètre de lissage gaussien prédéfini.

**4.** Procédé selon la revendication 1, dans lequel l'exécution du traitement de détection de limite sur la région à détecter selon une valeur de gradient entre tous les deux points de pixels adjacents dans la région à détecter, pour déterminer les limites de l'image cible consiste spécifiquement à :

    binariser l'image basse résolution pour convertir l'image basse résolution en une image binaire, l'image binaire ne comprenant que deux couleurs ;
    exécuter les opérations suivantes dans une direction arbitraire : comparer séparément une valeur de gradient entre tous les deux points de pixels adjacents dans la région à détecter de l'image binaire dans la direction arbitraire avec un seuil de gradient initial prédéfini correspondant à la direction arbitraire, et acquérir une limite initiale dans la direction arbitraire selon le résultat de la comparaison ; et

déterminer respectivement les limites de l'image cible selon le nombre de limites initiales acquises dans chaque direction.

5. Procédé selon la revendication 4, dans lequel la détermination des limites de l'image cible respectivement selon le nombre de limites initiales acquises dans chaque direction consiste spécifiquement à :

> exécuter l'opération suivante pour un résultat de détection dans une direction arbitraire ;
> effectuer séparément une détection de ligne droite sur chaque limite initiale dans la direction arbitraire selon les informations de position de chaque limite initiale dans la direction arbitraire lorsque le nombre de limites initiales acquises dans la direction arbitraire est d'au moins deux, pour acquérir des limites dans la direction arbitraire à partir des au moins deux limites initiales dans la direction arbitraire.

6. Procédé selon la revendication 4, dans lequel la détermination des limites de l'image cible respectivement selon le nombre de limites initiales acquises dans chaque direction consiste spécifiquement à :

> exécuter l'opération suivante pour un résultat de détection dans une direction arbitraire,
> diminuer successivement le seuil de gradient initial prédéfini correspondant à la direction arbitraire selon une première différence de gradient prédéfinie lorsque le nombre de limites initiales acquises dans la direction arbitraire est inférieur à deux, et détecter la région à détecter de l'image binaire dans la direction arbitraire en utilisant le seuil de gradient initial diminué, jusqu'à ce que le nombre de limites initiales acquises dans la direction arbitraire soit d'au moins deux.

7. Procédé selon la revendication 1, après l'acquisition de l'image cible comprise dans l'image d'origine, le procédé consiste en outre à :
corriger l'image cible à l'aide d'un algorithme de transformation projective.

8. Appareil de traitement d'image comprenant des moyens pour mettre en œuvre le procédé selon l'une quelconque des revendications 1 à 7.

**FIG. 1**

Camera device   Camera device                                      Camera device

· · · · · ·

Image collection device

Image processing device

**FIG. 2**

300

Acquire an original image, wherein the original image
includes a target image

310

Perform image compression processing on the original image
according to a preset compression ratio, to acquire a low-pixel
image after the image compression processing

320

Determine borderlines of the target image from the
low-pixel image

330

Map the borderlines included in the low-pixel image into the
original image, to acquire the target image included in the
original image

**FIG. 3**

a1

An image processing device determines, among all original pixel points included in the original image, four original pixel points corresponding to each compressed pixel according to a preset compression ratio

a2

The image processing device determines, among the four original pixel points corresponding to each pixel point after compression, two pairs of original pixel points in a first direction and two pairs of original pixel points in a second direction

a3

The image processing device acquires first interpolations respectively corresponding to the two pairs of original pixel points of each pixel point after compression in the first direction, and takes the acquired two first interpolations as initial interpolations; or, the image processing device acquires second interpolations respectively corresponding to the two pairs of original pixel points of each pixel point after compression in the second direction, and takes the acquired two second interpolations as the initial interpolations

a4

The image processing device calculates an interpolation corresponding to each pixel point after compression according to the two initial interpolations corresponding to each pixel point after compression, and determines the calculated interpolation corresponding to each pixel point after compression as the pixel value of each pixel point after compression

# FIG. 4

Origin                                  Horizontal axis

Original image

Vertical axis

**FIG. 5a**

**FIG. 5b**

FIG. 6

b1

Binarize a low-pixel image, and convert the low-pixel image into a binary image, wherein the binary image includes only two colors

b2

Execute the following operations in an arbitrary direction: separately comparing a gradient value between every two adjacent pixel points in a to-be-detected region of the binary image in the arbitrary direction with a preset initial gradient threshold corresponding to the arbitrary direction, and acquiring an initial borderline in the arbitrary direction according to the comparison result

b3

Separately perform straight line detection on each initial borderline in the arbitrary direction according to position information of each initial borderline in the arbitrary direction when the number of initial borderlines acquired in the arbitrary direction is at least two, to acquire borderlines in the arbitrary direction from the at least two initial borderlines in the arbitrary direction

b4

Successively decrease the preset initial gradient threshold corresponding to the arbitrary direction according to a preset first gradient difference when the number of initial borderlines acquired in the arbitrary direction is less than two, and detect the to-be-detected region of the binary image in the arbitrary direction by using the decreased initial gradient threshold, until the number of initial borderlines acquired in the arbitrary direction is at least two

FIG. 7

| | | | |
|---|---|---|---|
| $i^{th}$ row | $Z_{i1}$ | $Z_{i2}$ | $Z_{i3}$ |
| $(i+1)^{th}$ row | $Z_{(i+1)1}$ | $Z_{(i+1)2}$ | $Z_{(i+1)3}$ |

**FIG. 8**

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120014608 A
- CN 101511022

**Non-patent literature cited in the description**

- **BUSI SAGANDI et al.** *Tracking of Moving Objects by Using a Low Resolution Image*